# EUROPÄISCHE PATENTSCHRIFT

(11) **EP 2 275 375 B1**
(45) Veröffentlichungstag und Bekanntmachung des Hinweises auf die Patenterteilung: **07.08.2013**
(21) Anmeldenummer: 10166083.5
(22) Anmeldetag: 16.06.2010
(51) Int. Cl.: B65H 49/18, B65H 51/06, B65H 51/10, B65H 51/30, B23K 9/133

(54) **Verfahren und Einrichtung zur Förderung von Draht**
Method and device for transporting wire
Procédé et dispositif destinés au transport de fil d'acier

(30) Priorität: 16.07.2009 DE 102009033391
(43) Veröffentlichungstag der Anmeldung: 19.01.2011
(73) Patentinhaber: Bayerische Motoren Werke Aktiengesellschaft, 80809 München (DE)
(72) Erfinder: Goelz, Ronald, 84032, Altdorf (DE); Wagener, Wolfram, 34305, Niedenstein (DE); Bartholomie, Georg, 84100, Niederaichbach (DE); Schreier, Emil, 84177, Gottfrieding (DE)

(56) Entgegenhaltungen:
- EP-A1- 1 726 375
- DE-A1- 4 320 405
- DE-B- 1 130 663
- GB-A- 1 217 174
- GB-A- 1 258 561
- GB-A- 2 152 900
- US-A- 3 506 176
- US-A- 4 791 271
- US-A- 5 137 223

## Beschreibung

### Verfahren und Einrichtung zur Förderung von Draht

Die vorliegende Erfindung betrifft ein Verfahren und eine Einrichtung zur Förderung von Draht gemäß den Merkmalen der Patentansprüche 1 bzw. 2.

Bei Schweißverfahren, bei denen mit einem Schweißdraht gearbeitet wird, sowie bei thermischen Beschichtungsverfahren, wie z.B. dem Lichtbogendrahtspritzen, muss der in Form eines Drahts zugeführte Schweiß- bzw. Beschichtungswerkstoff möglichst präzise zum "Drahtverbraucher" gefördert werden. Von Vorteil ist es, wenn mit möglichst großen Drahtvorratsrollen gearbeitet werden kann, da sich dann "Rüstzeiten", die bei einem Wechsel von Drahtvorratsrollen erforderlich entstehen, minimieren lassen.

Bei industriellen Fertigungsanlagen kann der vom Draht zu überwindende Förderweg von der Drahtvorratsrolle zum "Drahtverbraucher", d.h. zur Schweiß- oder Spritzpistole, mehrere Meter (z.B. 10 - 15m) betragen. Üblicherweise ist der Draht in Kunststoffröhren oder Kunststoffschläuchen geführt, die oftmals mehrere Bögen aufweisen, was zu entsprechenden Reibungsverlusten führt. Zur Überwindung dieser Reibungsverluste ist eine Drahtfördereinrichtung mit einer entsprechend großen Förderleistung erforderlich.

Aus der US 3,506,176 A1 ist eine Vorrichtung zur Zuführung eines Schweißdrahts während des Schmelzschweißens bekannt, die eine Vorschubrolle mit einer keilförmigen Vertiefung aufweist. Diese Vorschubrolle ist mit einer zweiten Rolle verspannt, so dass durch Rotation der beiden Rollen der Schweißdraht gefördert werden kann.

Aus der US 5,137,223 ist eine Schweißdrahtzuführ-Vorrichtung bekannt, bei der der Schweißdraht von einem Schweißdrahtspeicher 14 über eine Umlenkrolle 30, einem Antriebsrad 33 zugeführt wird. Mit dem Antriebsrad wird der Schweißdraht an die Schweißstelle gefördert.

Ein weiteres Problem ergibt sich daraus, dass der Drahtbedarf am "Drahtverbraucher" üblicherweise nicht kontinuierlich, sondern häufig intermittierend besteht. Ein kontinuierlicher Antrieb einer unter Umständen recht schweren Drahtvorratsrolle ist daher per se nicht zielführend. Ein entsprechend dem tatsächlichen Drahtverbrauch geregelter Antrieb der Drahtvorratsrolle ist insbesondere bei sehr schweren Drahtvorratsrollen (Gewicht >200kg) sehr kostenintensiv und störungsanfällig.

Bei sehr langen Drahtführungen und/oder sehr großen Drahtvorratsrollen wird bisweilen eine frequenz- bzw. bedarfsgeregelte Drahtfördereinrichtung verwendet, die eine entsprechend hohe Leistung aufweist und mit Drahtförderrollen arbeitet, welche den Draht zwischen sich mit einem vergleichsweise hohem Anpressdruck einklemmen. Teilweise werden gerändelte, geriffelte oder anderweitig profilierte Förderrollen eingesetzt, um den Schlupf zwischen dem Draht und den Förderrollen zu verringern. Ein hoher Anpressdruck hat den Nachteil, dass sich der Draht verformt bzw. dass sich die Profilierungen der Förderrollen in die Drahtoberfläche einprägen. Durch die damit einhergehende Aufrauung der Drahtoberfläche kommt es im weiteren Verlauf der Drahtförderung an Drahtumlenkeinrichtungen, Kunststoffschläuchen sowie am "Drahtverbraucher" (z.B. Spritz- oder Schweißpistole) zu einem signifikanten Verschleiß, was wiederum zu Anlagenstillstandszeiten und erhöhten Reparaturkosten führt.

Aufgabe der Erfindung ist es, ein Verfahren sowie eine Fördereinrichtung zur Förderung von Draht anzugeben, das bzw. die in konstruktiv einfacher Weise eine möglichst verschleißfreie und bedarfsgerechte Drahtförderung ermöglicht.

Diese Aufgabe wird durch die Merkmale des Patentanspruches 1 bzw. 2 gelöst. Vorteilhafte Ausgestaltungen und Weiterbildungen der Erfindung sind den Unteransprüchen zu entnehmen.

Das Grundprinzip des erfindungsgemäßen Verfahrens zur Förderung von Draht zu einem Drahtverbraucher, insbesondere zu einer Schweiß- oder Spritzeinrichtung, besteht darin, dass der Draht mittels einer Drahtförderrolle, die von einer Antriebseinrichtung angetrieben wird, von einer drehbar angeordneten Drahtvorratsrolle abgerollt wird, wobei der Draht zumindest in manchen Betriebszuständen reibschlüssig am Außenumfang der Drahtförderrolle anliegt. Eine Drahtförderung, d.h. ein Abrollen von Draht von der Drahtvorratsrolle erfolgt nur dann, wenn der Draht hinreichend gespannt ist, so dass er reibschlüssig an der am Außenumfang der Drahtförderrolle anliegt.

Die für eine reibschlüssige Kraftübertragung von der Drahtförderrolle auf den Draht erforderliche Drahtspannkraft wird von einer Fördereinrichtung aufgebracht, die zwischen der Drahtförderrolle und dem Drahtverbraucher angeordnet ist. Die Fördereinrichtung kann ein Paar angetriebener Förderrollen oder mehrere Paare angetriebener Förderrollen aufweisen, zwischen denen der Draht geführt bzw. mit einer gewissen Vorspannkraft eingeklemmt ist, wobei der Draht durch Drehen der Förderrollen gefördert wird.

Vorzugsweise handelt es sich bei der Fördereinheit um eine Fördereinheit, die Draht entsprechend dem momentanen Drahtbedarf des Drahtverbrauchers fördert. Bei der Fördereinheit kann es sich insbesondere um eine frequenzgeregelte Fördereinheit handeln. Vorzugsweise ist die Fördereinheit so nahe wie möglich an dem Drahtverbraucher angeordnet. Es ist von Vorteil, wenn die Förderrollen der Fördereinrichtung einen möglichst glatten Außenumfang aufweisen, um zu vermeiden, dass die Drahtoberffäche beschädigt wird.

Aus dem Euler'schen Reibgesetz folgt unmittelbar, dass die für eine reibschlüssige Kraftübertragung erforderliche Drahtspannkraft umso kleiner sein kann, je größer der "Umschlingungswinkel" des Drahts in Bezug auf die Drahtförderrolle ist. So kann z.B. vorgesehen sein, dass der Draht auf einem Umfangsabschnitt von mehr als 90° am Außenumfang der Drahtförderrolle anliegt, vorzugsweise auf einem Umfangsabschnitt von mehr als 180°.

Nach einer Weiterbildung der Erfindung ist vorgesehen, dass der Draht die Drahtförderrolle im Wesentlich einmal umschlingt, was den Vorteil hat, dass bereits bei einer sehr geringen von der Fördereinrichtung aufgebrachten Drahtspannkraft eine zuverlässige reibschlüssige Kraftübertragung von der Drahtförderrolle auf den Draht sichergestellt ist.

Eine gemäß der Erfindung reibschlüssig arbeitende Drahtförderrolle hat den Vorteil, dass die Drahtförderrolle mit konstanter Drehzahl angetrieben werden kann. Die effektive Drahtförderung kann in einfacher Weise durch entsprechende bedarfsgerechte Ansteuerung der Fördereinrichtung gesteuert werden. Stoppt der Drahtbedarf am Drahtverbraucher, so wird die Fördereinrichtung gestoppt, was unmittelbar zu einem Abfall der Drahtspannkraft und somit unmittelbar zu einem Abfall der Reibkraft zwischen der Drahtförderrolle und dem Draht führt. Die Drahtförderrolle dreht dann "leer" durch, ohne dass weiterer Draht von der Drahtvorratsrolle abgerollt wird. Sobald die Fördereinrichtung wieder eingeschaltet wird, baut sich unmittelbar eine Spannkraft im Draht auf, was dazu führt, dass die Drahtförderrolle wieder Draht von der Drahtvorratsrolle abrollt.

Zusammenfassend werden mit der Erfindung folgende Vorteile erreicht:
- Die Drahtförderrolle kann gleichmäßig und kontinuierlich angetrieben werden und zwar auch in Phasen, in denen am Drahtverbraucher gerade kein Drahtbedarf besteht.
- Die Fördereinrichtung benötigt nur eine vergleichsweise geringe Antriebsleistung.
- Zur Drahtförderung in der Fördereinrichtung genügen vergleichsweise geringe Anpresskräfte, was den Vorteil hat, dass die Drahtaberfläche nicht beschädigt wird.
- Aufgrund der glatten Drahtoberfläche werden in Förderrichtung nachfolgende Komponenten, wie z.B, Schläuche, Schweiß- oder Spritzpistolen, Umlenkungen etc. kaum verschlissen.
- Die reibschlüssige Kraftübertragung zwischen der Drahtförderrolle und dem Draht ermöglicht eine konstruktiv einfach gestaltete Fördereinrichtung und eine entsprechend einfache Steuerung. Die erfindungsgemäße Anordnung eignet sich auch für sehr große und schwere Drahtvorratsrollen, wodurch sich Rüstzeiten und Rüstkosten minimieren.

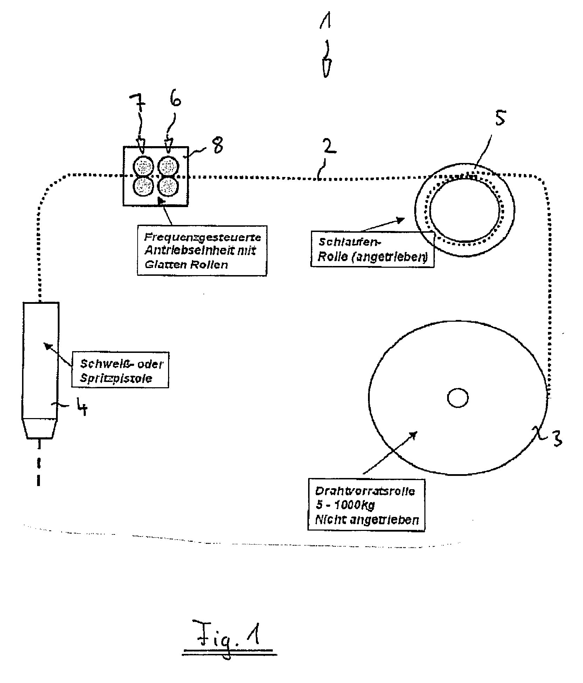

Die einzige Figur 1 verdeutlicht das Grundprinzip der Erfindung in schematischer Darstellung.

Figur 1 zeigt eine Fördereinrichtung 1 zur Förderung von Draht 2 von einer Drahtvorratsrolle 3 zu einem Drahtverbraucher 4, bei dem es sich beispielsweise um eine Schweißpistole, eine Spritzpistole oder um eine sogenannte Drehlanze handeln kann, wie sie z.B. beim Lichtbogendrahtspritzen eingesetzt wird. Anwendung findet das Lichtbogendrahtspritzen z.B. beim Beschichten zylindrischer Oberflächen, wie z.B. Laufflächen von Kurbelgehäusen von Verbrennungsmotoren.

Die Drahtvorratsrolle 3 ist drehbar angeordnet. Sie wird aber nicht unmittelbar angetrieben. Der von der Drahtvorratsrolle kommende Draht 2 umschlingt bei dem hier gezeigten Ausführungsbeispiel eine Drahtförderrolle 5. Es kann vorgesehen sein, dass der Draht die Drahtförderrolle 5 im Wesentlichen einmal, d.h. auf einem Umfangswinkel von ca. 360° umschlingt.

Der Draht 2 liegt, sofern er eine gewisse Vorspannung aufweist, reibschlüssig am Außenumfang der Drahtförderrolle 5 an. Die Drahtförderrolle 5 wird durch eine hier nicht näher dargestellte Antriebseinrichtung, wie z.B. einen Elektromotor, angetrieben. Die Drahtförderrolle 5 kann kontinuierlich und mit konstanter Drehzahl angetrieben werden.

Von der Drahtförderrolle 5 kommend ist der Draht 2 durch zwei Förderrollenpaare 6, 7 einer Fördereinrichtung hindurch geführt. Die Förderrollen der beiden Förderrollen paare 6, 7 werden jeweils mit einer gewissen Andrück- bzw. Vorspannkraft zusammengedrückt und von einer hier nicht näher dargestellten Antriebseinrichtung angetrieben. Durch Drehen der beiden Förderrollenpaare 6, 7 wird der Draht 2 gefördert. Die Förderleistung der Fördereinrichtung 8 kann relativ gering sein. Primär geht es darum, dass die Fördereinrichtung 8 eine gewisse Spannkraft auf den Draht 2 ausübt, die lediglich so groß sein muss, dass der Draht 2 reibschlüssig am Außenumfang der Drahtförderrolle anliegt und eine Kraftübertragung von der Drahtförderrolle 5 auf den Draht 2 ermöglicht wird. Die beiden Förderrollenpaare 6, 7 fördern den Draht zu dem Drahtverbraucher 4.

Die Drehzahl der Drahtförderrolle 5 kann z.B. im Bereich zwischen 20 - 12D U/min, vorzugsweise bei ca. 60 U/min liegen. Der Durchmesser der Drahtföderrolle kann z.B. 300 mm betragen.

Das Verhältnis zwischen dem Durchmesser der Drahtföderrolle in Millimeter und der Drehzahl der Drahtföderrrolle gemessen in Umdrehungen pro Minute sollte vorzugsweise im Bereich zwischen 0,5 - 10, vorzugsweise bei ca. 6 liegen.

## Patentansprüche

1. Verfahren zur Förderung von Draht (2) zu einem Drahtverbraucher (4), insbesondere zu einer Schweiß- oder Spritzeinrichtung, wobei der Draht mittels einer von einer Antriebseinrichtung angetriebenen Drahtförderrolle (5), an deren Außenumfang der Draht (2) reibschlüssig anliegt, von einer drehbar angeordneten Drahtvorratsrolle (3) abgerollt wird, **dadurch gekennzeichnet, dass** die für eine reibschlüssige Kraftübertragung von der Drahtförderrolle (5) auf den Draht (2) erforderliche Spannkraft von einer Fördereinrichtung (8) aufgebracht wird, die zwischen der Drahtförderrolle (5) und dem Drahtverbraucher (4) angeordnet ist und dass die Drahtförderrolle (5) in Phasen, in denen kein Drahtbedarf besteht und die Fördereinheit (8) dementsprechend keinen Draht fördert, weiterhin von der Antriebseinrichtung angetrieben wird, dann aber im Wesentlichen aber lastfrei läuft.

2. Fördereinrichtung zur Förderung von Draht (2) zu einem Drahtverbraucher (4), insbesondere zu einer Schweiß- oder Spritzeinrichtung, mit
- einer drehbar angeordneten Drahtvorratsrolle (3), auf der zu fördernder Draht (2) aufgewickelt ist, und
- einer Drahtförderrolle (5), die von einer Antriebseinrichtung angetrieben wird, wobei der Draht (2) sich von der Drahtvorratsrolle (3) zumindest über einen Teilabschnitt eines Außenumfangs der Drahtförderrolle (5) erstreckt und reibschlüssig an dem Außenumfang der Drahtförderrolle (5) anliegt **dadurch gekennzeichnet, dass** die für eine reibschlüssige Kraftübertragung von der Drahtförderrolle (5) auf den Draht (2) erforderliche Spannkraft von einer Fördereinrichtung (8) aufgebracht wird, die zwischen der Drahtförderrolle (5) und dem Drahtverbraucher (4) angeordnet ist, und dass
die Drahtförderrolle (5) in Phasen, in denen kein Drahtbedarf besteht und die Fördereinheit (8) dementsprechend keinen Draht fördert, weiterhin von der Antriebseinrichtung angetrieben wird, dann aber im Wesentlichen aber lastfrei läuft.

3. Verfahren bzw. Fördereinrichtung nach einem der vorangehenden Ansprüche,
**dadurch gekennzeichnet, dass** die Fördereinrichtung (8) mindestens ein Paar (6, 7) angetriebener Förderrollen aufweist, zwischen denen der Draht (2) eingeklemmt ist, wobei der Draht (2) durch Drehen der Förderrollen (6, 7) gefördert wird.

4. Verfahren bzw. Fördereinrichtung nach einem der vorangehenden Ansprüche,
**dadurch gekennzeichnet, dass** der Draht (2) auf einem Umfangsabschnitt von mehr als 90° am Außenumfang der Drahtförderrolle (5) anliegt.

5. Verfahren bzw. Fördereinrichtung nach einem der vorangehenden Ansprüche,
**dadurch gekennzeichnet, dass** der Draht (2) auf einem Umfangsabschnitt von mehr als 180° am Außenumfang der Drahtförderrolle (5) anliegt.

6. Verfahren bzw. Fördereinrichtung nach einem der vorangehenden Ansprüche,
**dadurch gekennzeichnet, dass** der Draht (2) die Drahtförderrolle (5) im Wesentlichen einmal vollständig umschlingt.

7. Verfahren bzw. Fördereinrichtung nach einem der vorangehenden Ansprüche,
**dadurch gekennzeichnet, dass** die Fördereinheit (8) Draht (2) entsprechend dem momentanen Drahtbedarf des Drahtverbrauchers (4) fördert.

8. Verfahren bzw. Fördereinrichtung nach einem der vorangehenden Ansprüche,
**dadurch gekennzeichnet, dass** die Drehzahl der Drahtförderrolle (5) im Bereich von 20 - 120 U/min, insbesondere bei ca. 60 U/min, liegt.

9. Verfahren bzw. Fördereinrichtung nach einem der vorangehenden Ansprüche,
**dadurch gekennzeichnet, dass** das Verhältnis zwischen dem Durchmesser der Drahtföderrolle (5) in Millimeter und der Drehzahl der Drahtföderrrolle (5) in Umdrehungen pro Minute im Bereich zwischen 0,5 und 10, insbesondere bei ca. 6, liegt.

## Claims

1. A device for conveying wire (2) to a wire receiver (4), especially a welding or spraying device, wherein the wire frictionally engages an outer periphery of a wire conveying roller (5) driven by a device and is reeled off a rotatable wire storage roller, **characterised in that** the tension force required for frictional transference of force from the wire conveying roller (5) to the wire (2) is supplied by a conveying device (8) disposed between the conveying roller (5) and the wire consumer (4), and that in phases in which no wire is required and the conveying unit (8) consequently does not convey wire, the wire conveying roller (5) continues to be driven by the device and then runs substantially without load.

2. A device for conveying wire (2) to a wire consumer (4), especially to a welding or spraying device, comprising
- a rotatable wire storage roller (3) on which the wire (2) is wound for conveying and
- a wire conveying roller (5) driven by a drive device, wherein the wire (2) extends from the storage roller (3) over at least a part of an outer periphery of the wire conveying roller (5) and frictionally engages the outer periphery of the wire conveying roller (5),
**characterised in that** the tension force required for frictional transference of force from the conveying roller (5) to the wire (2) is applied by a conveying device (8) disposed between the wire conveying roller (5) and the wire receiver (4),
and **in that** phases in which no wire is required and the conveying unit (8) consequently does not convey wire, the wire conveying roller (5) continues to be driven by the drive device and then runs substantially load-free.

3. A device for conveying wire according to any of the preceding claims,
**characterised in that** the conveying device (8) comprises at least one pair (6, 7) of driven conveying rollers between which the wire (2) is clamped, wherein the wire (2) is conveyed by rotation of the rollers (6, 7).

4. A method or conveying device according to any of the preceding claims,
**characterised in that** the wire (2) abuts the outer periphery of the wire conveying roller (5) over more than 90°.

5. A method or conveying device according to any of the preceding claims,
**characterised in that** the wire (2) abuts the outer periphery of the wire conveying roller (5) over more than 180°.

6. A method or conveying device according to any of the preceding claims,
**characterised in that** the wire (2) completely surrounds the conveying roller (5) substantially once.

7. A method or conveying device according to any of the preceding claims,
**characterised in that** the conveying unit (8) conveys wire (2) in accordance with the instantaneous requirement of the wire consumer (4).

8. A method or conveying device according to any of the preceding claims,
**characterised in that** the speed of the wire conveying roller (5) is substantially in the range from 2 to 120 rpm, especially about 60 rpm.

9. A method or conveying device according to any of the preceding claims,
**characterised in that** the ratio of the diameter of the wire conveying roller (5) in millimetres to the speed of the wire conveying roller (5) in rpm is in the range between 0.5 and 10, especially about 6.

## Revendications

1. Procédé de transport de fil métallique (2) vers un utilisateur de fils (4) notamment une installation de soudage ou de projection selon lequel,
le fil est dévidé d'un rouleau d'alimentation en fil (3) monté à rotation, par un rouleau de transfert de fil (5) entraîné dans le sens de l'entraînement et contre la périphérie extérieure duquel le fil (2) est appliqué par une liaison par frottements,
procédé **caractérisé en ce que**
la force de serrage nécessaire à la transmission de force par la liaison par frottements du rouleau de transfert de fil (5) au fil (2) est appliquée par une installation de transfert (8) située entre le rouleau d'alimentation en fil (5) et l'utilisateur de fils (4), et
- le rouleau de transfert de fils (5) continue d'être entraîné dans le sens de l'entraînement dans les phases au cours desquels il n'y a pas de demande de fils et que l'unité de transfert (8) ne demande pas de fils, le rouleau d'alimentation en fils (5) tournant alors essentiellement à vide.

2. Installation de transport de fil métallique (2) vers un utilisateur de fils (4) notamment une installation de soudage ou de projection comportant :
- un rouleau d'alimentation en fil (3) monté à rotation et sur lequel est enroulé le fil (2) à transférer, et
- un rouleau de transfert de fils (5) entraîné par une installation d'entraînement, le fil (2) passant du rouleau d'alimentation en fil (3) sur au moins un segment de la périphérie extérieure du rouleau de transfert de fil (5) en étant appliqué contre la périphérie extérieure du rouleau de transfert de fil (5) par une liaison par frottement,
installation **caractérisée en ce que**
la force de serrage nécessaire à la transmission de force par la liaison par frottements du rouleau de transfert de fil (5) au fil (2) est appliquée par une installation de transfert (8) située entre le rouleau d'alimentation en fil (5) et l'utilisateur de fils (4), et
- dans les phases dans lesquelles il n'y a pas de demande de fil et dans lesquels l'unité de transfert (8) ne demande en conséquence pas de fils, le rouleau de transfert de fil (5) continue d'être entraîné par l'installation d'entraînement tout en tournant alors essentiellement à vide.

3. Procédé et installation de transport selon l'une des revendications 1 et 2,
**caractérisés en ce que**
l'installation de transfert (8) comporte au moins une paire de rouleau de transfert (6, 7), entraînée, entre lesquelles est serré le fil (2),
le fil (2) étant transféré par la rotation des rouleau de transfert (6, 7).

4. Procédé et installation de transport selon l'une des revendications 1 et 2,
**caractérisés en ce que**
le fil (2) est appliqué sur un segment périphérique de plus de 90° de la périphérie du rouleau de transfert de fil (5).

5. Procédé et installation de transport selon l'une des revendications 1 et 2,
**caractérisés en ce que**
le fil (2) est appliqué sur un segment périphérique de plus de 180° à la périphérie du rouleau de transfert de fil (5).

6. Procédé et installation de transport selon l'une des revendications 1 et 2,
**caractérisés en ce que**
le fil (2) entoure au moins sur un tour complètement le rouleau de transfert de fils (5).

7. Procédé et installation de transport selon l'une des revendications 1 et 2,
**caractérisés en ce que**
l'unité de transfert de fil (8) transfère le fil (2) en fonction de la demande instantanée de fil par l'utilisateur de fils (4).

8. Procédé et installation de transport selon l'une des revendications 1 et 2,
**caractérisés en ce que**
la vitesse de rotation du rouleau de transfert de fils (5) se situe dans une plage de 20-120 T/min, notamment d'environ 60 T/min.

9. Procédé et installation de transport selon l'une des revendications 1 et 2,
**caractérisés en ce que**
le rapport entre le diamètre du rouleau de transfert de fil (5) en millimètre et la vitesse de rotation du rouleau de transfert (5) en tour par minute se situe dans une plage comprise entre 0,5 et 10 notamment à environ 6.
